# EUROPÄISCHE PATENTSCHRIFT

(11) **EP 1 725 104 B1**
(45) Veröffentlichungstag und Bekanntmachung des Hinweises auf die Patenterteilung: **18.11.2015**
(21) Anmeldenummer: 05715725.7
(22) Anmeldetag: 04.03.2005
(51) Int. Cl.: A01N 47/06, A01N 43/38, A01N 51/00, A01N 25/04

(54) **SUSPENSIONSKONZENTRATE AUF LBASIS**
OIL-BASED SUSPENSION CONCENTRATES
CONCENTRES EN SUSPENSION A BASE D'HUILE

(30) Priorität: 06.03.2004 DE 102004011007
(43) Veröffentlichungstag der Anmeldung: 29.11.2006
(73) Patentinhaber: Bayer Intellectual Property GmbH, 40789 Monheim am Rhein (DE)
(72) Erfinder: BAUR, Peter, 86938 Schondorf (DE); FISCHER, Reiner, 40789 Monhein (DE); VERMEER, Ronald, 51371 Leverkusen (DE)
(74) Vertreter: BIP Patents
(86) Internationale Anmeldenummer: PCT/EP2005/002285
(87) Internationale Veröffentlichungsnummer: WO 2005/084435

(56) Entgegenhaltungen:
- EP-A- 0 789 999
- WO-A-97/36868
- WO-A-98/05638
- WO-A-03/000053
- WO-A-03/015519
- WO-A-03/024222
- WO-A-03/099005

## Beschreibung

Die vorliegende Erfindung betrifft neue, ölbasierte Suspensionskonzentrate von agrochemischen Wirkstoffen, ein Verfahren zur Herstellung dieser Formulierungen und deren Verwendung zur Applikation der enthaltenen Wirkstoffe.

Es sind bereits zahlreiche wasserfreie Suspensionskonzentrate von agrochemischen Wirkstoffen bekannt geworden. So werden in der EP-A 0 789 999 Formulierungen dieses Typs beschrieben, die neben Wirkstoff und Öl ein Gemisch verschiedener Tenside, - darunter auch solche, die als Penetrationsförderer dienen -, sowie ein hydrophobiertes Alumoschichtsilikat als Verdickungsmittel enthalten. Die Stabilität dieser Zubereitungen ist gut. Nachteilig ist aber, dass zwingend ein Verdickungsmittel vorhanden ist, denn dadurch wird die Herstellung aufwändiger. Außerdem absorbiert das Verdickungsmittel jeweils einen Teil der zugesetzten Menge an Penetrationsförderer, der deshalb für seine eigentliche Funktion nicht zur Verfügung steht.

Weiterhin sind aus der US-A 6 165 940 schon nicht-wässrige Suspensionskonzentrate bekannt, in denen außer agrochemischem Wirkstoff, Penetrationsförderer und Tensid bzw. Tensid-Gemisch ein organisches Solvens vorhanden ist, wobei als derartige Lösungsmittel auch Parafinöl oder Pflanzenöl-Ester in Frage kommen. Die biologische Wirksamkeit und/oder Kulturpflanzenverträglichkeit und/oder die Stabilität der aus diesen Formulierungen durch Verdünnen mit Wasser herstellbaren Spritzbrühen ist jedoch nicht immer ausreichend.

DE-A 10 129 855 beschreibt weitere Suspensionskonzentrate auf Ölbasis, die agrochemische Wirkstoffe, Penetrationsförderer und Tenside enthalten.

Die in den o.g. Patentanmeldungen beschriebenen Penetrationsförderer sind "offene" Alkanol-alkoxylate.

Es wurden nun neue Suspensionskonzentrate auf Ölbasis gefunden, die aus
- mindestens einem bei Raumtemperatur festen agrochemischen Wirkstoff, wobei der Wirkstoff ausgewählt ist aus der Gruppe Imidacloprid, Spirotetramat,
- mindestens einem "geschlossenen" Penetrationsförderer, wobei der "geschlossenen" Penetrationsförderer ausgewählt ist aus der Gruppe der Verbindung der Formel (Ie-1)

   CH3-(CH2)10-O-(-EO-)6-(-BO-)2-CH3 (Ie-1)

   in welcher
   - EO: für CH2-CH2-O- steht,
   - BO: für 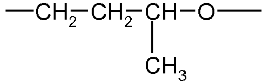 steht und
   die Zahlen 6 und 2 Durchschnittswerte darstellen sowie der
   Verbindung der Formel (Ie-2)

   CH3-(CH2)8-O-(-EO-)8-(-BO-)2-CH3 (Ie-2)

   in welcher
   - EO: für CH2-CH2-O- steht,
   - BO: für 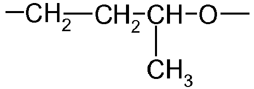 steht, und
   die Zahlen 8 und 2 Durchschnittswerte darstellen,
- mindestens einem Pflanzenöl oder Mineralöl,
- mindestens einem nicht-ionischen Tensid und/oder mindestens einem anionischen Tensid und
- gegebenenfalls einem oder mehreren Zusatzstoffen aus den Gruppen der Emulgiermittel, der schaumhemmenden Mittel, der Konservierungsmittel, der Antioxydantien, der Farbstoffe und/oder der inerten Füllmaterialien
bestehen.

Weiterhin wurde gefunden, dass sich die erfindungsgemäßen Suspensionskonzentrate auf Ölbasis herstellen lassen, indem man
- mindestens einen bei Raumtemperatur festen agrochemischen Wirkstoff, wobei der Wirkstoff ausgewählt ist aus der Gruppe Imidacloprid, Spirotetramat,
- mindestens einen "geschlossenen" Penetrationsförderer, wobei der "geschlossenen" Penetrationsförderer ausgewählt ist aus der Gruppe der Verbindung der Formel (Ie-1)

   CH3-(CH2)10-O-(-EO-)6-(-BO-)2-CH3 (Ie-1)

   in welcher
   - EO: für CH2-CH2-O- steht,
   - BO: für 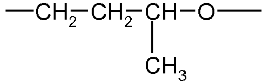 steht und
   die Zahlen 6 und 2 Durchschnittswerte darstellen sowie der
   Verbindung der Formel (Ie-2)

   CH3-(CH2)8-O-(-EO-)8-(-BO-)2-CH3 (Ie-2)

   in welcher
   - EO: für CH2-CH2-O- steht,
   - BO: für 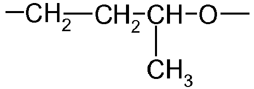 steht, und
   die Zahlen 8 und 2 Durchschnittswerte darstellen,
- mindestens ein Pflanzenöl oder Mineralöl,
- mindestens ein nicht-ionisches Tensid und/oder mindestens ein anionisches Tensid und
- gegebenenfalls einen oder mehrere Zusatzstoffe aus den Gruppen der Emulgiermittel, der schaumhemmenden Mittel, der Konservierungsmittel, der Antioxydantien, der Farbstoffe und/oder der inerten Füllmaterialien
miteinander vermischt und die entstehende Suspension gegebenenfalls anschließend mahlt.

Schließlich wurde gefunden, dass sich die erfindungsgemäßen Suspensionskonzentrate auf Ölbasis sehr gut zur Applikation der enthaltenen agrochemischen Wirkstoffe auf Pflanzen und/oder deren Lebensraum eignen.

Es ist als äußerst überraschend zu bezeichnen, dass die erfindungsgemäßen Suspensionskonzentrate auf Ölbasis eine sehr gute Stabilität aufweisen, obwohl sie kein Verdickungsmittel enthalten. Unerwartet ist auch, dass sie eine bessere biologische Wirksamkeit und/oder Kulturpflanzenverträglichkeit zeigen als die am ähnlichsten zusammengesetzten, vorbekannten Formulierungen. Im Übrigen übertreffen die erfindungsgemäßen ölbasierten Suspensionskonzentrate hinsichtlich ihrer Aktivität überraschenderweise auch analoge Zubereitungen, die neben den anderen Komponenten entweder nur Penetrationsförderer oder nur Pflanzenöl enthalten. Ein solcher synergistischer Effekt war aufgrund des vorbeschriebenen Standes der Technik nicht vorhersehbar. Weiterhin ist es sehr überraschend, dass die "geschlossenen" Penetrationsförderer eine bessere biologische Wirksamkeit aufweisen als die entsprechenden "offenen" Penetrationsförderer.

Die erfindungsgemäßen Suspensionskonzentrate auf Ölbasis zeichnen sich auch durch eine Reihe von Vorteilen aus. So ist deren Herstellung weniger aufwändig als die Zubereitung entsprechender Formulierungen, in denen Verdickungsmittel vorhanden sind. Vorteilhaft ist weiterhin, dass beim Verdünnen der erfindungsgemäßen Konzentrate mit Wasser weder eine signifikante Aufrahmung noch eine störende Flockenbildung eintritt, was bei entsprechenden vorbekannten Zubereitungen häufig der Fall ist. Schließlich begünstigen die erfindungsgemäßen Formulierungen die biologische Wirksamkeit der enthaltenen aktiven Komponenten, so dass im Vergleich zu herkömmlichen Zubereitungen entweder eine höhere Wirksamkeit erzielt wird oder weniger Wirkstoff erforderlich ist.

Unter festen, agrochemischen Wirkstoffen sind im vorliegenden Zusammenhang Substanzen zur Pflanzenbehandlung zu verstehen, deren Schmelzpunkt oberhalb von 20°C liegt.

Die Ölsuspensionskonzentrate auf Ölbasis enthalten die Verbindung der Formel (I")

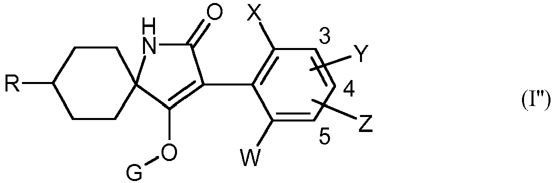

| **Beispiel-Nr.** | **W** | **X** | **Y** | **Z** | **R** | **G** | **Fp.°C** |
|---|---|---|---|---|---|---|---|
| I"-4 | H | CH₃ | 5-CH₃ | H | OCH₃ | CO₂-C₂H₅ | 128 |

Weiterhin enthalten die Ölsuspensionskonzentrate auf Ölbasis Imidacloprid. Penetrationsförderer im vorliegenden Zusammenhang sind Substanzen die üblicherweise eingesetzt werden, um das Eindringen von agrochemischen Wirkstoffen in Pflanzen zu verbessern. Penetrationsförderer werden in diesem Zusammenhang dadurch definiert, dass sie aus der wässerigen Spritzbrühe und/oder aus dem Spritzbelag in die Kutikula der Pflanze eindringen und dadurch die Stoffbeweglichkeit (Mobilität) von Wirkstoffen in der Kutikula erhöhen können. Die nachher und in der Literatur (Baur et al., 1997, Pesticide Science 51, 131-152) beschriebene Methode kann zur Bestimmung dieser Eigenschaft eingesetzt werden.

Die Alkanol-alkoxylate der Formel (Ie) sind die Verbindungen

CH₃-(CH₂)₁₀-O-(-EO-)₆-(-BO-)₂-CH₃ (Ie-1)

in welcher
EO für CH₂-CH₂-O- steht,
BO für 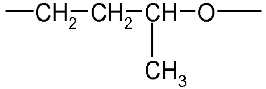 steht und
   die Zahlen 6 und 2 Durchschnittswerte darstellen.

Die Alkanol-alkoxylate der Formel (Ie-2) sind die Verbindungen

CH₃-(CH₂)₈-O-(-EO-)₈-(-BO-)₂-CH₃ (Ie-2)

in welcher
- EO: für CH₂-CH₂-O- steht,
- BO: für 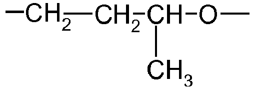 steht, und
die Zahlen 8 und 2 Durchschnittswerte darstellen.

Die Alkanol-alkoxylate sind durch die obigen Formeln allgemein definiert. Bei diesen Substanzen handelt es sich um Gemische von Stoffen des angegebenen Typs mit unterschiedlichen Kettenlängen. Für die Indices errechnen sich deshalb Durchschnittswerte, die auch von ganzen Zahlen abweichen können.

Die "geschlossenen" Alkanol-alkoxylate der angegebenen Formeln sind bekannt und kommerziell erhältlich oder lassen sich nach bekannten Methoden herstellen (EP-A 0 681 865).

Unter "geschlossenen" Penetrationsförderern versteht man in der Regel Verbindungen der Formel (I) wie sie in der Anmeldung beschrieben sind.

Unter "offenen" Penetrationsförderern versteht man in der Regel Verbindungen der Formel (I), wobei R für Wasserstoff steht. Beschrieben sind die Penetrationsförderer in EP-A-681 865.

Die Verbindungen der Formel (I') sind bekannt:
Von 3-Acyl-pyrrolidin-2,4-dionen sind pharmazeutische Eigenschaften vorbeschrieben (S. Suzuki et al. Chem. Pharm. Bull. 15 1120 (1967)). Weiterhin wurden N-Phenylpyrrolidin-2,4-dione von R. Schmierer und H. Mildenberger (Liebigs Ann. Chem. 1985, 1095) synthetisiert.

In EP-A-0 262 399 und GB-A-2 266 888 werden ähnlich strukturierte Verbindungen (3-Aryl-pyrrolidin-2,4-dione) offenbart. Bekannt sind unsubstituierte, bicyclische 3-Aryl-pyrrolidin-2,4-dion-Derivate (EP-A-355 599, EP-A-415 211 und JP-A-12-053 670) sowie substituierte monocyclische 3-Aryl-pyrrolidin-2,4-dion-Derivate (EP-A-377 893 und EP-A-442 077).

Weiterhin bekannt sind polycyclische 3-Arylpyrrolidin-2,4-dion-Derivate (EP-A-442 073) sowie 1H-Arylpyrrolidin-dion-Derivate (EP-A-456 063, EP-A-521 334, EP-A-596 298, EP-A-613 884, EP-A-613 885, WO 94/01 997, WO 95/26 954, WO 95/20 572, EP-A-0 668 267, WO 96/25 395, WO 96/35 664, WO 97/01 535, WO 97/02 243, WO 97/36 868, WO 97/43275, WO 98/05638, WO 98/06721, WO 98/25928, WO 99/16748, WO 99/24437, WO 99/43649, WO 99/48869 und WO 99/55673, WO 01/17972, WO 01/23354, WO 01/74770, WO 04/024688, WO 04/007448, WO 04/080962 und WO 04/065366).

Weiterhin sind Δ³-Dihydrofuran-2-on-Derivate bekannt (vgl. DE-A-4 014 420). Die Synthese der als Ausgangsverbindungen verwendeten Tetronsäurederivate (wie z.B. 3-(2-Methyl-phenyl)-4-hydroxy-5-(4-fluorphenyl)-Δ³-dihydrofuranon-(2)) ist ebenfalls in DE-A-4 014 420 beschrieben. Ähnlich strukturierte Verbindungen sind aus der Publikation Campbell et al., J. Chem. Soc., Perkin Trans. 1, 1985, (8) 1567-76 bekannt. Weiterhin sind 3-Aryl-Δ³-dihydrofuranon-Derivate aus EP-A-528 156, EP-A-0 647 637, WO 95/26 345, WO 96/20 196, WO 96/25 395, WO 96/35 664, WO 97/01 535, WO 97/02 243, WO 97/36 868, WO 98/05638, WO 98/25928, WO 99/16748, WO 99/43649, WO 99/48869, WO 99/55673, WO 01/17 972, WO 01/23354, WO 01/74770, WO04/024688 und WO 04/080962) bekannt.

Als Pflanzenöle kommen alle üblicherweise in agrochemischen Mitteln einsetzbaren, aus Pflanzen gewinnbaren Öle und Gemische dieser Öle in Frage. Beispielhaft genannt seien Sonnenblumenöl, Rapsöl, Olivenöl, Sojabohnenöl und Maisöl.

Die erfindungsgemäßen Suspensionskonzentrate auf Ölbasis enthalten mindestens ein nicht-ionisches Tensid und/oder mindestens ein anionisches Tensid.

Als nicht-ionische Tenside kommen alle üblicherweise in agrochemischen Mitteln einsetzbaren Stoffe dieses Typs in Betracht. Vorzugsweise genannt seien Polyethylenoxid-polypropylenoxid-Blockcopolymere, Polyethylenglykolether von linearen Alkoholen, Umsetzungsprodukte von Fettsäuren mit Ethylenoxid und/oder Propylenoxid, ferner Polyvinylalkohol, Polyvinylpyrrolidon, Mischpolymerisate aus Polyvinylalkohol und Polyvinylpyrrolidon sowie Copolymerisate aus (Meth)-acrylsäure und (Meth)acrylsäureestern, weiterhin Alkylethoxylate und Alkylarylethoxylate, die gegebenenfalls phosphatiert und gegebenenfalls mit Basen neutralisiert sein können, wobei Sorbitolethoxylate beispielhaft genannt seien.

Als anionische Tenside kommen alle üblicherweise in agrochemischen Mitteln einsetzbaren Substanzen dieses Typs in Frage. Bevorzugt sind Alkalimetall- und Erdalkalimetall-Salze von Alkylsulfonsäuren oder Alkylarylsulfonsäuren.

Als Zusatzstoffe, die in den erfindungsgemäßen Formulierungen enthalten sein können, kommen Emulgatoren, schaumhemmende Mittel, Konservierungsmittel, Antioxydantien, Farbstoffe und inerte Füllmaterialien in Betracht.

Bevorzugte Emulgatoren sind ethoxylierte Nonylphenole, Umsetzungsprodukte von Alkylphenolen mit Ethylenoxid und/oder Propylenoxid, ethoxylierte Arylalkylphenole, weiterhin ethoxylierte und propoxylierte Arylalkylphenole, sowie sulfatierte oder phosphatierte Arylalkylethoxylate bzw. - ethoxy-propoxylate, wobei Sorbitan-Derivate, sie Polyethylenoxid-Sorbitan-Fettsäureester und Sorbitan-Fettsäureester, beispielhaft genannt seien.

Als schaumhemmende Stoffe kommen alle üblicherweise für diesen Zweck in agrochemischen Mitteln einsetzbaren Substanzen in Betracht. Bevorzugt sind Silikonöle und Magnesiumstearat.

Als Konservierungsmittel kommen alle üblicherweise für diesen Zweck in agrochemischen Mitteln dieses Typs einsetzbaren Substanzen in Frage. Als Beispiele genannt seien Preventol® (Fa. Bayer AG) und Proxel®.

Als Antioxydantien kommen alle üblicherweise für diesen Zweck in agrochemischen Mitteln einsetzbaren Substanzen in Betracht. Bevorzugt ist 2,6-Di-tert.-butyl-4-methylphenol.

Als Farbstoffe kommen alle üblicherweise für diesen Zweck in agrochemischen Mitteln einsetzbaren Substanzen in Frage. Beispielhaft genannt seien Titandioxid, Farbruß, Zinkoxid und Blaupigmente sowie Permanentrot FGR.

Als inerte Füllmaterialien kommen alle üblicherweise für diesen Zweck in agrochemischen Mitteln einsetzbaren Substanzen in Betracht, die nicht als Verdickungsmittel fungieren. Bevorzugt sind anorganische Partikel, wie Carbonate, Silikate und Oxide, sowie auch organische Substanzen, wie Harnstoff-Formaldehyd-Kondensate. Beispielhaft erwähnt seien Kaolin, Rutil, Siliciumdioxid, sogenannte hochdisperse Kieselsäure, Kieselgele, sowie natürliche und synthetische Silikate, außerdem Talkum.

Der Gehalt an den einzelnen Komponenten kann in den erfindungsgemäßen Suspensionskonzentraten auf Ölbasis innerhalb eines größeren Bereiches variiert werden. So liegen die Konzentrationen
- an agrochemischen Wirkstoff im Allgemeinen zwischen 5 und 30 Gew.-%, vorzugsweise zwischen 10 und 25 Gew.-%,
- an "geschlossenen" Penetrationsförderer im Allgemeinen zwischen 5 und 30 Gew.-%, vorzugsweise zwischen 15 und 25 Gew.-%,
- an Pflanzenöl oder Mineralöl im Allgemeinen zwischen 20 und 55 Gew.-%, vorzugsweise zwischen 25 und 50 Gew.-%,
- an Tensiden im Allgemeinen zwischen 2,5 und 30 Gew.-%, vorzugsweise zwischen 5,0 und 25 Gew.-% und
- an Zusatzstoffen im Allgemeinen zwischen 0 und 25 Gew.-%, vorzugsweise zwischen 0 und 20 Gew.-%.

Die Herstellung der erfindungsgemäßen Suspensionskonzentrate auf Ölbasis erfolgt in der Weise, dass man die Komponenten in den jeweils gewünschten Verhältnissen miteinander vermischt. Die Reihenfolge, in der die Bestandteile miteinander vermengt werden, ist beliebig. Zweckmäßigerweise setzt man die festen Komponenten in feingemahlenem Zustand ein. Es ist aber auch möglich, die nach dem Vermengen der Bestandteile entstehende Suspension zunächst einer Grob- und dann einer Feinmahlung zu unterziehen, so dass die mittlere Teilchengröße unterhalb von 20 µm liegt. Bevorzugt sind Suspensionskonzentrate, in denen die festen Partikel eine mittlere Teilchengröße zwischen 1 und 10 µm aufweisen.

Die Temperaturen können bei der Durchführung des erfindungsgemäßen Verfahrens in einem bestimmten Bereich variiert werden. Man arbeitet im Allgemeinen bei Temperaturen zwischen 10°C und 60°C, vorzugsweise zwischen 15°C und 40°C. Zur Durchführung des erfindungsgemäßen Verfahrens kommen übliche Misch- und Mahlgeräte in Betracht, die zur Herstellung von agrochemischen Formulierungen eingesetzt werden.

Bei den erfindungsgemäßen Suspensionskonzentraten auf Ölbasis handelt es sich um Formulierungen, die auch nach längerer Lagerung bei erhöhten Temperaturen oder in der Kälte stabil bleiben, da kein Kristallwachstum beobachtet wird. Sie lassen sich durch Verdünnen mit Wasser in homogene Spritzflüssigkeiten überführen. Die Anwendung dieser Spritzflüssigkeiten erfolgt nach üblichen Methoden, also zum Beispiel durch Verspritzen, Gießen oder Injizieren.

Die Aufwandmenge an den erfindungsgemäßen Suspensionskonzentraten auf Ölbasis kann innerhalb eines größeren Bereiches variiert werden. Sie richtet sich nach den jeweiligen agrochemischen Wirkstoffen und nach deren Gehalt in den Formulierungen.

Mit Hilfe der erfindungsgemäßen Suspensionskonzentrate auf Ölbasis lassen sich agrochemische Wirkstoffe in besonders vorteilhafter Weise auf Pflanzen und/oder deren Lebensraum ausbringen. Die enthaltenen agrochemischen Wirkstoffe entfalten dabei eine bessere biologische Wirksamkeit (insbesondere eine bessere biologische Wirksamkeit und/oder eine bessere Kulturpflanzenverträglichkeit) als bei Applikation in Form der entsprechenden herkömmlichen Formulierungen.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Suspensionskonzentraten erfolgt direkt oder durch Einwirkung auf deren Umgebung, Lebensraum oder Lagerraum nach den üblichen Behandlungsmethoden, z.B. durch Tauchen, Sprühen, Spritzen, Verdampfen, Vernebeln, Aufstreichen und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetic Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps, Rüben, Zuckerrohr sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im Folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft mit den erfindungsgemäßen Suspensionskonzentraten behandelt werden. Die bei den Suspensionskonzentraten oben angegebenen Vorzugsbereiche gelten auch für die Behandlung dieser Pflanzen. Besonders hervorgehoben sei die Pflanzenbehandlung mit den im vorliegenden Text speziell aufgeführten Suspensionskonzentraten.

Die Erfindung wird durch die folgenden Beispiele veranschaulicht.

### Herstellungsbeispiele

### Beispiel 1

Zur Herstellung eines Suspensionskonzentrates werden
- 100,0 g: der Verbindung gemäß Beispiel (I"-4)
- 100,0 g: Polyoxyethylen-sorbitol-oleat
- 90,0 g: eines Gemisches aus polyalkoxylierten Alkoholen (Atlox 4894)
- 10,0 g: Ligninsulfonat (Borresperse NA)
- 0,5 g: Polydimethylsiloxan
- 2,0 g: 2,6-Di-tert.-butyl-n-methylphenol
- 2,0 g: wasserfreie Zitronensäure
unter Rühren bei Raumtemperatur in ein Gemisch aus
- 250,0 g: der Verbindung der Formel (Ie-2) und
- 440,0 g: Sonnenblumenöl
gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

### Beispiel 2

Zur Herstellung eines Suspensionskonzentrates werden
- 100,0 g: der Verbindung gemäß Beispiel (I"-4)
- 100,0 g: Polyoxyethylen-sorbitol-oleat
- 100,0 g: eines Gemisches aus Polyoxyethylenfettsäureglycerid (Atlas G 1281)
- 0,5 g: Polydimethylsiloxan
- 2,0 g: 2,6-Di-tert.-butyl-n-methylphenol
- 2,0 g: wasserfreie Zitronensäure
unter Rühren bei Raumtemperatur in ein Gemisch aus
- 250,0 g: der Verbindung der Formel (Ie-1) und
- 445,0 g: Sonnenblumenöl
gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

### Beispiel 3

Zur Herstellung eines Suspensionskonzentrates werden
- 200,0 g: Imidacloprid
- 100,0 g: Polyoxyethylen-sorbitol-oleat
- 70,0 g: eines Gemisches aus polyalkoxylierten Alkoholen (Atlox 4894)
- 30,0 g: Ligninsulfonat (Borresperse NA)
- 0,5 g: Polydimethylsiloxan
- 2,0 g: 2,6-Di-tert.-butyl-n-methylphenol
- 2,0 g: wasserfreie Zitronensäure
unter Rühren bei Raumtemperatur in ein Gemisch aus
- 200,0 g: der Verbindung der Formel (Ie-2) und
- 400,0 g: Sonnenblumenöl
gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

### Vergleichsbeispiel 1

Zur Herstellung eines Suspensionskonzentrates werden
- 100,0 g: der Verbindung gemäß Beispiel (I"-4)
- 100,0 g: Polyoxyethylen-sorbitol-oleat
- 90,0 g: eines Gemisches aus polyalkoxylierten Alkoholen (Atlox 4894)
- 10,0 g: Ligninsulfonat (Borresperse NA)
- 0,5 g: Polydimethylsiloxan
- 2,0 g: 2,6-Di-tert.-butyl-n-methylphenol
- 2,0 g: wasserfreie Zitronensäure
unter Rühren bei Raumtemperatur in ein Gemisch aus
- 250,0 g: der Verbindung der Formel

CH₃-(CH₂)₈-O-(-EO-)₈-(-BO-)₂-H

in welcher
EO für CH₂-CH₂-O- steht,
BO für 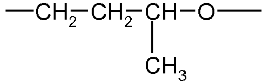 steht und
die Zahlen 8 und 2 Durchschnittswerte darstellen und
440,0 g Sonnenblumenöl
gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

### Vergleichsbeispiel 2

Zur Herstellung eines Suspensionskonzentrates werden
- 200,0 g: Imidacloprid
- 100,0 g: Polyoxyethylen-sorbitol-oleat
- 70,0 g: eines Gemisches aus polyalkoxylierten Alkoholen (Atlox 4894)
- 30,0 g: Ligninsulfonat (Borresperse NA)
- 0,5 g: Polydimethylsiloxan
- 2,0 g: Butylhydroxytoluol
- 2,0 g: wasserfreie Zitronensäure
unter Rühren bei Raumtemperatur in ein Gemisch aus
- 200,0 g: der Verbindung der Formel

CH₃-(CH₂)₈-O-(-EO-)₈-(-BO-)₂-H

in welcher
EO für CH₂-CH₂-O- steht,
BO für 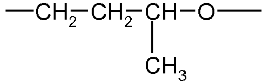 steht und
die Zahlen 8 und 2 Durchschnittswerte darstellen und
400,0 g Sonnenblumenöl
gegeben. Nach beendeter Zugabe wird noch 10 Minuten bei Raumtemperatur nachgerührt. Die dabei entstehende homogene Suspension wird zunächst einer Grob- und dann einer Feinmahlung unterworfen, so dass eine Suspension erhalten wird, in der 90 % der Feststoffpartikel eine Teilchengröße unter 6 µm aufweisen.

### Anwendungsbeispiele

### Beispiel I

### Testbeschreibung: Penetrationsförderer auf der Ebene der Kutikula

Additive, die als Penetrationsförderer auf der Ebene der Kutikula wirken, seien nachfolgend als Akzelerator-Additive bezeichnet (vgl. Schönherr und Baur, 1994, Pesticide Science 42, 185-208). Akzelerator-Additive zeichnen sich dadurch aus, dass sie aus der wäßrigen Spritzbrühe und/oder aus dem Spritzbelag in die Kutikula eindringen und dadurch die Stoffbeweglichkeit (Mobilität) von Wirkstoffen In der Kutikula erhöhen können. Andere Additive wie Polyethylenglykol wirken dagegen nur im Spritzbelag (über die Flüssigphase) oder wirken nur als Netzmittel wie z.B. Natriumdodecylsulfat.

In diesem Test wird der Einfluß von Additiven auf die Penetrationseigenschaften anderer Substanzen auf der Ebene der Kutikula bestimmt. Dabei wird die Mobilität einer Testsubstanz in der Kutikula ohne und mit einem Additiv über eine Desorptionsmethode gemessen. Die Methode ist detailliert in der Literatur veröffentlicht (Baur et al., 1997, Pesticide Science, 51, 131-152) und lediglich die Prinzipien und Abweichungen werden nachfolgend beschrieben.
Als Testsubstanz mit der Funktion eines Tracers wurde hier eine radioaktiv markierte schwache organische Säure ausgewählt. Als Pflanzenmaterial wurden die enzymatisch isolierten Blattkutikeln der Oberseite von Birnenblättern von Freilandbäumen verwendet. Die Kutikeln wurden in speziell angefertigte Diffusionszellen aus Edelstahl eingebaut. Der Tracer wurde in einem Citratpuffer bei pH 3 in gelöstem Zustand auf die ursprünglich dem Blattinneren zugewandten Seite appliziert. Diese Innenseite nimmt die kleine radioaktive Menge des Tracers in der nicht dissoziierten Säureform leicht auf. Anschließend wurde diese Innenseite abgedeckt und bei 100% Luftfeuchte gehalten. Die normalerweise luftexponierte, morphologische Aussenseite der Blattkutikula wurde dann mit einem Puffer (pH7), der Rezeptorlösung in Kontakt gebracht und die Desorption gestartet. Die penetrierte Säureform der Testsubstanz wird durch den Rezeptor dissoziiert und die Desorption erfolgt einer Kinetik erster Ordnung. Die Desorptionskonstante ist proportional der Mobilität des Tracers in der Kutikula.
Nach mindestens 2 Zeiten zur Bestimmung dieser Konstanten wird nun die Desorption mit einem Puffer fortgesetzt, der zusätzlich das zu testende Additiv enthält. Je nach Eigenschaft des Additives kommt es nun zur Sorption des Additives in der Kutikula und je nach Wirksamkeit als Weichmacher für die Kutikula erhöht sich die Mobilität des Tracers in der Kutikula. Dies äußert sich in einer erhöhten Desorptionskonstante und das Verhältnis der Steigungen mit Additiv zu dem ohne Additiv beschreibt den Effekt des Additives auf der Ebene der Kutikula als Penetrationsförderer zu wirken. Der Vergleich des mittleren Effektes verschiedener Additive gibt damit deren Wirksamkeit als Weichmacher der Kutikula zu agieren wieder.

### Ergebnis:

Effekt von verschlossenen (methylierten) und offenen (nicht-methylierten) Additiven auf die Wirkstoffmobilität (hier einer schwachen organischen Säure) in der Kutikula. Als Additive wurden ein methyliertes bzw. nicht-methyliertes Isotridecyl-(6) ethoxylat und die oben erwähnten Penetrationsförderer Ie-1 und Ie-2 sowie ihre offenen Formen Ie'-1 und Ie'-2 verwendet.

| Additiv | Mittlerer Effekt | SE (Standardfehler) |
|---|---|---|
| Isotridecyl-(6) ethoxylat, offen | 42.3 | 9.3 |
| Isotridecyl-(6) ethoxylat, verschlossen | 78.9 | 21.5 |
| Ie'-1, offen | 9.0 | 1.8 |
| Ie-1 (=verschlossen) | 78.4 | 26.1 (Additiv aus Beispiel 2) |
| Ie'-2, offen | 45.1 | 14.3 |
| Ie-2, (=verschlossen) | 89.1 | 19.1 (Additiv aus Beispiel 1) |

### Beispiel II

### Penetrationstest

In diesem Test wird die Penetration von Wirkstoffen durch enzymatisch isolierte Kutikeln von Apfelbaumblättern gemessen.

Verwendet werden Blätter, die in voll entwickeltem Zustand von Apfelbäumen der Sorte Golden Delicious abgeschnitten werden. Die Isolierung der Kutikel erfolgt in der Weise, dass
- zunächst auf der Unterseite mit Farbstoff markierte und ausgestanzte Blattscheiben mittels Vakuuminfiltration mit einer auf einen pH-Wert zwischen 3 und 4 gepufferten Pectinase-Lösung (0,2 bis 2 %ig) gefüllt werden,
- dann Natriumazid hinzugefügt wird und
- die so behandelten Blattscheiben bis zur Auflösung der ursprünglichen Blattstruktur und zur Ablösung der nicht zellulären Kutikula stehen gelassen werden.

Danach werden nur die von Spaltöffnungen und Haaren freien Kutikeln der Blattoberseiten weiter verwendet. Sie werden mehrfach abwechselnd mit Wasser und einer Pufferlösung, pH-Wert 7, gewaschen. Die erhaltenen sauberen Kutikel werden schließlich auf Teflonplättchen aufgezogen und mit einem schwachen Luftstrahl geglättet und getrocknet.

Im nächsten Schritt werden die so gewonnenen Kutikularmembranen für Membran-Transport-Untersuchungen in Diffusionszellen (=Transportkammern) aus Edelstahl eingelegt. Dazu werden die Kutikeln mit einer Pinzette mittig auf die mit Silikonfett bestrichenen Ränder der Diffusionszellen plaziert und mit einem ebenfalls gefetteten Ring verschlossen. Die Anordnung ist so gewählt, dass die morphologische Außenseite der Kutikeln nach außen, also zur Luft, gerichtet ist, während die ursprüngliche Innenseite dem Inneren der Diffusionszelle zugewandt ist. Die Diffusionszellen sind mit Wasser bzw. mit einem Gemisch aus Wasser und Lösungsmittel gefüllt.

Zur Bestimmung der Penetration werden jeweils 10 µl einer 0.1 g/L Wirkstoff enthaltende Spritzbrühe der nachstehend genannten Formulierungen auf die Außenseite einer Kutikula appliziert.

In den Spritzbrühen wird jeweils Leitungswasser verwendet.

Nach dem Auftragen der Spritzbrühen lässt man jeweils das Wasser verdunsten, dreht dann die Kammern um und stellt sie in thermostatisierte Wannen, wobei auf die Außenseite der Kutikula jeweils Luft einer definierten Luftfeuchte und Temperatur geblasen wird. Die einsetzende Penetration findet daher bei einer relativen Luftfeuchtigkeit von 60 % und einer eingestellten Temperatur von 20°C statt. In regelmäßigen Abständen werden mit einer Spritze Proben entnommen und der Gehalt an penetriertem Wirkstoff gemessen.

Die Versuchsergebnisse gehen aus den Tabellen hervor. Bei den angegebenen Zahlen handelt es sich um Durchschnittswerte von 5 Messungen.

**Tabelle Ia: Penetration von der Verbindung gemäß Beispiel (I"-4) aus OD Formulierungen durch Apfelblattkutikeln**

| | Penetration (in %) | |
|---|---|---|
| Formulierung | Nach 10 Stunden | Nach 23 Stunden |
| Beispiel I | 19 | 34 |
| Vergleichsbeispiel I | 12 | 19 |

**Tabelle Ib Penetration von Imidacloprid aus OD Formulierungen durch Apfelblattkutikeln**

| Formulierung | Penetration (in %) | | |
|---|---|---|---|
| | Nach 3 Stunden | Nach 12 Stunden | Nach 24 Stunden |
| Beispiel III | 22 | 48 | 61 |
| Vergleichsbeispiel II | 11 | 35 | 50 |

### Beispiel III

Penetrationstest (siehe Bsp.II)

### Spritzbrühe A

- 0,1 g: der Verbindung gemäß Bsp. (I"-4)
- 0,25 g: der Verbindung der Formel (Ie-2)
- 0,44 g: Sonnenblumenöl
- 0,1 g: Polyoxyethylen-sorbitol-oleat
- 0,07 g: eines Gemisches aus polyalkoxylierten Alkoholen (Atlox 4894)
- 0,03 g: Ligninsulfonat (Borresperse NA) in 1 Liter Wasser

### Spritzbrühe B

- 0,1 g: der Verbindung gemäß Bsp. (I"-4)
- 0,4 g: der Verbindung der Formel (Ie-2)
- 0,1 g: Polyoxyethylen-sorbitol-oleat
- 0,07 g: eines Gemisches aus polyalkoxylierten Alkoholen (Atlox 4894)
- 0,03 g: Ligninsulfonat (Borresperse NA) in 1 Liter Wasser

### Spritzbrühe C

- 0,1 g: der Verbindung gemäß Bsp. (I"-4)
- 0,7 g: Sonnenblumenöl
- 0,1 g: Polyoxyethylen-sorbitol-oleat
- 0,07 g: eines Gemisches aus polyalkoxylierten Alkoholen (Atlox 4894)
- 0,03 g: Ligninsulfonat (Borresperse NA) in 1 Liter Wasser

### Spritzbrühe D

- 0,1 g: der Verbindung gemäß Bsp. (I"-4)
- 0,02 g: Tristerylphenol-(29) ethoxylate
- 0,1 g: Glycerin
in 1 Liter Wasser.

**Tabelle II**

| | Wirkstoffpenetration in % nach | | |
|---|---|---|---|
| | 1.5h | 10h | 22h |
| A | 11 | 31 | 47 |
| B | 5 | 22 | 33 |
| C | 2 | 7 | 16 |
| D | | | <5 |

## Patentansprüche

1. Suspensionskonzentrate auf Ölbasis, bestehend aus
- mindestens einem bei Raumtemperatur festen agrochemischen Wirkstoff, wobei der Wirkstoff ausgewählt ist aus der Gruppe Imidacloprid, Spirotetramat,
- mindestens einem "geschlossenen" Penetrationsförderer, wobei der "geschlossenen" Penetrationsförderer ausgewählt ist aus der Gruppe der Verbindung der Formel (Ie-1)
CH₃-(CH₂)₁₀-O-(-EO-)₆-(-BO-)₂-CH₃ (Ie-1)
in welcher
EO für CH₂-CH₂-O- steht,
BO für 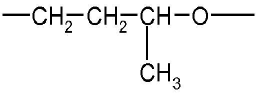 steht und
die Zahlen 6 und 2 Durchschnittswerte darstellen sowie der
Verbindung der Formel (Ie-2)
CH₃-(CH₂)₈-O-(-EO-)₈-(-BO-)₂-CH₃ (Ie-2)
in welcher
EO für CH₂-CH₂-O- steht,
BO für 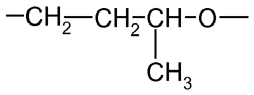 steht, und
die Zahlen 8 und 2 Durchschnittswerte darstellen,
- mindestens einem Pflanzenöl oder Mineralöl,
- mindestens einem nicht-ionischen Tensid und/oder mindestens einem anionischen Tensid und
- gegebenenfalls einem oder mehreren Zusatzstoffen aus den Gruppen der Emulgiermittel, der schaumhemmenden Mittel, der Konservierungsmittel, der Antioxydantien, der Farbstoffe und/oder der inerten Füllmaterialien.

2. Suspensionskonzentrate gemäß Anspruch 1, **dadurch gekennzeichnet, dass** als Pflanzenöl Sonnenblumenöl, Rapsöl, Olivenöl, Maisöl und/oder Sojabohnenöl enthalten ist.

3. Suspensionskonzentrate gemäß Anspruch 1, **dadurch gekennzeichnet, dass** der Gehalt
- an agrochemischen Wirkstoffen zwischen 5 und 30 Gew.-%,
- an "geschlossenem" Penetrationsförderer zwischen 5 und 30 Gew.-%,
- an Pflanzenöl oder Mineralöl zwischen 20 und 55 Gew.-%,
- an Tensiden zwischen 2,5 und 30 Gew.-% und
- an Zusatzstoffen zwischen 0 und 25 Gew.-%
liegt.

4. Verfahren zur Herstellung von Suspensionskonzentraten gemäß Anspruch 1, **dadurch gekennzeichnet, dass** man
- mindestens einen bei Raumtemperatur festen agrochemischen Wirkstoff, wobei der Wirkstoff ausgewählt ist aus der Gruppe Imidacloprid, Spirotetramat,
- mindestens einen "geschlossenen" Penetrationsförderer, wobei der "geschlossenen" Penetrationsförderer ausgewählt ist aus der Gruppe der Verbindung der Formel (Ie-1)
CH₃-(CH₂)₁₀-O-(-EO-)₆-(-BO-)₂-CH₃ (Ie-1)
in welcher
EO für CH₂-CH₂-O- steht,
BO für 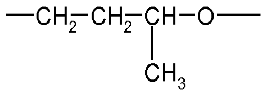 steht und
die Zahlen 6 und 2 Durchschnittswerte darstellen sowie der
Verbindung der Formel (Ie-2)
CH₃-(CH₂)₈-O-(-EO-)₈-(-BO-)₂-CH₃ (Ie-2)
in welcher
EO für CH₂-CH₂-O- steht,
BO für 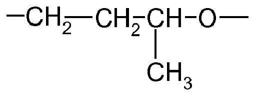 steht, und
die Zahlen 8 und 2 Durchschnittswerte darstellen,
- mindestens ein Pflanzenöl oder Mineralöl,
- mindestens ein nicht-ionischen Tensid und/oder mindestens ein anionischen Tensid und
- gegebenenfalls einen oder mehreren Zusatzstoffen aus den Gruppen der Emulgiermittel, der schaumhemmenden Mittel, der Konservierungsmittel, der Antioxydantien, der Farbstoffe und/oder der inerten Füllmaterialien.
miteinander vermischt und die entstehende Suspension gegebenenfalls anschließend mahlt.

5. Verwendung von Suspensionskonzentraten gemäß Anspruch 1 zur Applikation der enthaltenen agrochemischen Wirkstoffe auf Pflanzen und/oder deren Lebensraum.

6. Mittel, **gekennzeichnet durch** einen Gehalt an einem Suspensionskonzentrat gemäß Anspruch 1 und Streckmitteln und/oder oberflächenaktiven Reagenzien.

7. Verwendung von Suspensionskonzentraten gemäß Anspruch 1 zur Bekämpfung von Insekten.

## Claims

1. Oil-based suspension concentrates composed of
- at least one room-temperature-solid active agrochemical substance, wherein the substance is selected from the group of imidacloprid and spirotetramat,
- at least one "closed" penetrant, wherein the "closed" penetrant is selected from the group of the compound of the formula (Ie-1)
CH₃-(CH₂)₁₀-O-(-EO-)₆-(-BO-)₂-CH₃ (Ie-1)
in which
EO is CH₂-CH₂-O-,
BO is 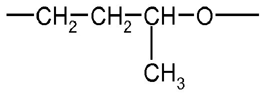 and
the numbers 6 and 2 represent average values, and of the compound of the formula (Ie-2)
CH₃-(CH₂)₈-O-(-EO-)₈-(-BO-)₂-CH₃ (Ie-2)
in which
EO is CH₂-CH₂-O- ,
BO is 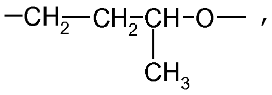 and
the numbers 8 and 2 represent average values,
- at least one vegetable oil or mineral oil,
- at least one nonionic surfactant and/or at least one anionic surfactant, and
- optionally one or more additives from the groups of the emulsifiers, foam inhibitors, preservatives, antioxidants, colorants and/or inert filler materials.

2. Suspension concentrates according to Claim 1, **characterized in that** sunflower oil, rapeseed oil, olive oil, corn oil and/or soya-bean oil is present as vegetable oil.

3. Suspension concentrates according to Claim 1, **characterized in that** the amount
- of active agrochemical substances is between 5% and 30% by weight,
- of "closed" penetrant is between 5% and 30% by weight,
- of vegetable oil or mineral oil is between 20% and 55% by weight,
- of surfactants is between 2.5% and 30% by weight, and
- of additives is between 0% and 25% by weight.

4. Process for producing suspension concentrates according to Claim 1, **characterized in that**
- at least one room-temperature-solid active agrochemical substance, wherein the substance is selected from the group of imidacloprid and spirotetramat,
- at least one "closed" penetrant, wherein the "closed" penetrant is selected from the group of the compound of the formula (Ie-1)
CH₃-(CH₂)₁₀-O-(-EO-)₆-(-BO-)₂-CH₃ (Ie-1)
in which
EO is CH₂-CH₂-O-,
BO is 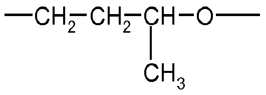 and
the numbers 6 and 2 represent average values, and of the compound of the formula (Ie-2)
CH₃-(CH₂)₈-O-(-EO-)₈-(-BO-)₂-CH₃ (Ie-2)
in which
EO is CH₂-CH₂-O- ,
BO is 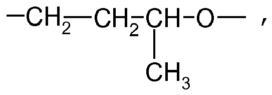 and
the numbers 8 and 2 represent average values,
- at least one vegetable oil or mineral oil,
- at least one nonionic surfactant and/or at least one anionic surfactant, and
- optionally one or more additives from the groups of the emulsifiers, foam inhibitors, preservatives, antioxidants, colorants and/or inert filler materials
are mixed with one another and the resulting suspension is optionally subsequently ground.

5. Use of suspension concentrates according to Claim 1 for applying the active agrochemical substances comprised to plants and/or their habitat.

6. Compositions **characterized by** the presence of a suspension concentrate according to Claim 1 and of extenders and/or surface-active reagents.

7. Use of suspension concentrates according to Claim 1 for controlling insects.

## Revendications

1. Suspensions concentrées à base d'huile, constituées par
- au moins une substance active agrochimique, solide à température ambiante, la substance active étant choisie dans le groupe formé par l'imidaclopride, le spirotétramate,
- au moins un agent "fermé" favorisant la pénétration, l'agent "fermé" favorisant la pénétration étant choisi dans le groupe formé par le composé de formule (Ie-1)
CH₃-(CH₂)₁₀-O-(-EO-)₆-(-BO-)₂-CH₃ (Ie-1)
dans laquelle
EO représente CH₂-CH₂-O-,
BO représente 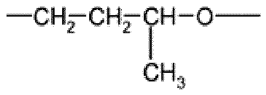 et
les nombres 6 et 2 représentent des valeurs moyennes ainsi que par le composé de formule (Ie-2)
CH₃-(CH₂)₈-O-(-EO-)₈-(-BO-)₂-CH₃ (Ie-2)
dans laquelle
EO représente CH₂-CH₂-O-,
BO représente 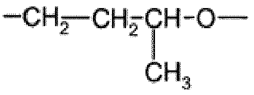 et
les nombres 8 et 2 représentent des valeurs moyennes
- au moins une huile végétale ou une huile minérale,
- au moins un agent tensioactif non ionique et/ou au moins un agent tensioactif anionique et
- le cas échéant un ou plusieurs additifs des groupes des émulsifiants, des antimousses, des conservateurs, des antioxydants, des colorants et/ou des charges inertes.

2. Suspensions concentrées selon la revendication 1, **caractérisées en ce qu'**elles contiennent, comme huiles végétales, de l'huile de tournesol, de l'huile de colza, de l'huile d'olive, de l'huile de maïs et/ou de l'huile de germes de soja.

3. Suspensions concentrées selon la revendication 1, **caractérisées en ce que** la teneur
- en substances actives agrochimiques se situe entre 5 et 30% en poids,
- en agents "fermés" favorisant la pénétration se situe entre 5 et 30% en poids,
- en huile végétale ou en huile minérale se situe entre 20 et 55% en poids,
- en agents tensioactifs se situe entre 2,5 et 30% en poids et
- en additifs se situe entre 0 et 25% en poids.

4. Procédé pour la production de suspensions concentrées selon la revendication 1, **caractérisé en ce qu'**on mélange, les uns avec les autres,
- au moins une substance active agrochimique, solide à température ambiante, la substance active étant choisie dans le groupe formé par l'imidaclopride, le spirotétramate,
- au moins un agent "fermé" favorisant la pénétration, l'agent "fermé" favorisant la pénétration étant choisi dans le groupe formé par le composé de formule (Ie-1)
CH₃-(CH₂)₁₀-O-(-EO-)₆-(-BO-)₂-CH₃ (Ie-1)
dans laquelle
EO représente CH₂-CH₂-O-,
BO représente 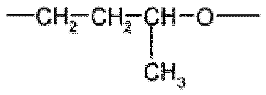 et
les nombres 6 et 2 représentent des valeurs moyennes ainsi que par le composé de formule (Ie-2)
CH₃-(CH₂)₈-O-(-EO-)₈-(-BO-)₂-CH₃ (Ie-2)
dans laquelle
EO représente CH₂-CH₂-O-,
BO représente 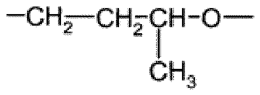 et
les nombres 8 et 2 représentent des valeurs moyennes
- au moins une huile végétale ou huile minérale,
- au moins un agent tensioactif non ionique et/ou au moins un agent tensioactif anionique et
- le cas échéant un ou plusieurs additifs des groupes des émulsifiants, des antimousses, des conservateurs, des antioxydants, des colorants et/ou des charges inertes.
et on broie le cas échéant ensuite la suspension formée.

5. Utilisation de suspensions concentrées selon la revendication 1 pour l'application des substances actives agrochimiques contenues sur des plantes et/ou leur espace de vie.

6. Agent, **caractérisé par** une teneur en une suspension concentrée selon la revendication 1 et en agents d'allongement et/ou en réactifs tensioactifs.

7. Utilisation de suspensions concentrées selon la revendication 1 pour lutter contre des insectes.
